# EUROPEAN PATENT APPLICATION

(11) **EP 4 818 837 A1**
(43) Date of publication of application: **07.10.2026**
(21) Application number: 24924574.7
(22) Date of filing: 11.12.2024
(51) Int. Cl.: G05D 1/246, G05D 1/693

(54) **INFORMATION PROCESSING SYSTEM, INFORMATION PROCESSING METHOD, PROGRAM, AND INFORMATION PROCESSING DEVICE**

(30) Priority: 15.02.2024 JP 2024021225
(71) Applicant: Oki Electric Industry Co., Ltd., Minato-ku Tokyo 105-8460 (JP)
(72) Inventor: NAKAJIMA, Yuji, Tokyo 105-8460 (JP); YAMADA, Keisuke, Tokyo 105-8460 (JP)
(74) Representative: Betten & Resch
(86) International application number: PCT/JP2024/043771
(87) International publication number: WO 2025/173371

(57) **Abstract**

An information processing system is provided. The information processing system includes a processing section configured to perform a process of determining a first stop block at which a movable body is at least temporarily stopped, based on a movement permitted direction of the movable body in a plurality of blocks in which the movable body can pass; and an output section configured to output information indicating the first stop block.

## Description

### Technical Field

The present disclosure relates to an information processing system, an information processing method, a program, and an information processing device.

### Background Art

In recent years, there is known a technology related to a movable body that autonomously moves. There may be also a case where the number of movable bodies that move in a predetermined range (such as an inside of a factory) is plural. In such a case, there is a probability that a plurality of movable bodies collide against each other. Hence, there are known various technologies for reducing the probability that a plurality of movable bodies collide against each other. For example, Patent Literature 1 discloses a technology of setting an entry restriction area in which a movable body is restricted from entering.

### Citation List

### Patent Literature

Patent Literature 1: JP 2000-330633 A

### Summary of Invention

### Technical Problem

However, places at which movable bodies need to stop are desirably set in advance based on a place at which there is a probability that a plurality of movable bodies collide against each other. Thus, it is expected that the probability that the plurality of movable bodies collide against each other is further reduced.

Hence, there is desired a technology that can further reduce a probability that a plurality of movable bodies collide against each other.

### Solution to Problem

In order to solve the above problems, according to one aspect of the present disclosure, an information processing system is provided. The information processing system includes a processing section configured to perform a process of determining a first stop block at which a movable body is at least temporarily stopped, based on a movement permitted direction of the movable body in a plurality of blocks in which the movable body can pass; and an output section configured to output information indicating the first stop block.

The processing section may determine based on the movement permitted direction whether or not there is a collision block that is a block to which the movable body from a plurality of directions can move, and may determine the first stop block based on the collision block when determining that there is the collision block.

When determining that there is a collision area including the one collision block or a plurality of the collision blocks that are continuous, the processing section may determine as the first stop block a block that is adjacent to the collision area and to which the movement permitted direction for the collision area has been set.

The information processing system may include a determination section configured to determine whether or not there is an object in the collision area, based on a notification of the movable body indicating that the movable body has arrived at the first stop block and a notification section configured to notify the movable body of a movement start instruction to the collision area when there is not the object in the collision area.

When there is a second stop block different from the first stop block at a movement destination of the movable body, and when the second stop block is adjacent to the collision area, the determination section may determine whether or not there is an object in the second stop block, and when there is not the object in the second stop block, the notification section may notify the movable body of a movement start instruction to the first stop block.

The output section may control display of the plurality of blocks, and the information processing system may further include an acquisition section configured to acquire a selection operation of selecting the movement permitted direction.

In order to solve the above problems, according to another aspect of the present disclosure, an information processing method executed by a computer is provided. The information processing method may include performing a process of determining a first stop block at which a movable body is at least temporarily stopped, based on a movement permitted direction of the movable body in a plurality of blocks in which the movable body can pass and outputting information indicating the first stop block.

In order to solve the above problems, according to another aspect of the present disclosure, a program is provided. The program may cause a computer to function as a processing section configured to perform a process of determining a first stop block at which a movable body is at least temporarily stopped, based on a movement permitted direction of the movable body in a plurality of blocks in which the movable body can pass and an output section configured to output information indicating the first stop block.

In order to solve the above problems, according to another aspect of the present disclosure, an information processing device is provided. The information processing device may include output section configured to control display of a plurality of blocks in which a movable body can pass; and an acquisition section configured to acquire a selection operation of selecting a movement permitted direction of the movable body in each of the plurality of blocks.

One straight line intersecting a boundary between a first block and a second block adjacent to each other among the plurality of blocks may include a first line that is part of an outline of the first block and a second line that is part of an outline of the second block. The acquisition section may acquire a movement operation for the straight line. The information processing device may include a processing section configured to move the straight line based on the acquisition of the movement operation.

The acquisition section may acquire a division operation at the boundary, and a first movement operation for the first line, and the processing section may divide the first line and the second line and moves the first line based on the acquisition of the first movement operation after the division operation is acquired.

In order to solve the above problems, according to another aspect of the present disclosure, an information processing method executed by a computer is provided. The information processing method may include controlling display of a plurality of blocks in which a movable body can pass and acquiring a selection operation of selecting a movement permitted direction of the movable body in each of the plurality of blocks.

In order to solve the above problems, according to another aspect of the present disclosure, a program is provided. The program may cause a computer to function as an output section configured to control display of a plurality of blocks in which a movable body can pass and an acquisition section configured to acquire a selection operation of selecting a movement permitted direction of the movable body in each of the plurality of blocks.

### Advantageous Effects of Invention

As described above, according to the present disclosure, there is provided a technology that can further reduce a probability that a plurality of movable bodies collide against each other.

### Brief Description of Drawings

[FIG. 1] FIG. 1 is a diagram illustrating a configuration example of an information processing system according to an embodiment of the present disclosure.
[FIG. 2] FIG. 2 is a diagram illustrating a configuration example of a movable body 10 according to the embodiment of the present disclosure.
[FIG. 3] FIG. 3 is a diagram illustrating a configuration example of a control device 20 according to the embodiment of the present disclosure.
[FIG. 4] FIG. 4 is a diagram illustrating a configuration example of a map compilation terminal 30 according to the embodiment of the present disclosure.
[FIG. 5] FIG. 5 is a diagram illustrating a configuration example of a request input terminal 50 according to the embodiment of the present disclosure.
[FIG. 6] FIG. 6 is a diagram illustrating a configuration example of a database server 60 according to the embodiment of the present disclosure.
[FIG. 7] FIG. 7 is a diagram illustrating a configuration example of area data 641.
[FIG. 8] FIG. 8 is a diagram illustrating a configuration example of group data 642.
[FIG. 9] FIG. 9 is a diagram illustrating a configuration example of movable body data 643.
[FIG. 10] FIG. 10 is a diagram illustrating a first example of a map compilation screen.
[FIG. 11] FIG. 11 is a diagram for describing limitation on a movement range of an outline of a block.
[FIG. 12] FIG. 12 is a diagram illustrating a second example of the map compilation screen.
[FIG. 13] FIG. 13 is a diagram illustrating a third example of the map compilation screen.
[FIG. 14] FIG. 14 is a diagram illustrating an example of a block property screen.
[FIG. 15] FIG. 15 is a diagram illustrating a configuration example of block data 644.
[FIG. 16] FIG. 16 is a diagram for describing significance of causing a block to belong to a group.
[FIG. 17] FIG. 17 is a diagram for describing automatic assignment of a temporary stop direction to the block.
[FIG. 18] FIG. 18 is another diagram for describing automatic assignment of the temporary stop direction to the block.
[FIG. 19] FIG. 19 is a diagram illustrating a configuration example of request data 645.
[FIG. 20] FIG. 20 illustrates a first half of a flowchart illustrating an operation example of an information processing system 1 according to the embodiment of the present disclosure.
[FIG. 21] FIG. 21 illustrates a second half of the flowchart illustrating the operation example of the information processing system 1 according to the embodiment of the present disclosure.

### Description of Embodiments

A suitable embodiment of the present disclosure will be described in detail below with reference to the accompanying drawings. Note that components employing the substantially same functional configurations in the specification and the drawings will be assigned the same reference numerals, and explanation thereof will be omitted.

Further, there are cases where a plurality of components employing the substantially same functional configurations in the specification and the drawings are distinguished by assigning different numbers to ends of the same reference numerals. In this regard, each of, for example, the plurality of components employing the substantially same functional configurations that do not need to be distinguished in particular will be assigned only the same reference numerals.

### (0. Outline)

First, an outline of the embodiment of the present disclosure will be described. In this specification, a technology that can further reduce a probability that a plurality of movable bodies collide against each other will be mainly described. The specification mainly proposes an information processing system that determines a block at which a movable body is at least temporarily stopped, based on a movement permitted direction of the movable body in each of a plurality of blocks in which the movable body can pass.

The outline of the embodiment of the present disclosure has been described above.

### (1-1. Configuration of Information Processing System)

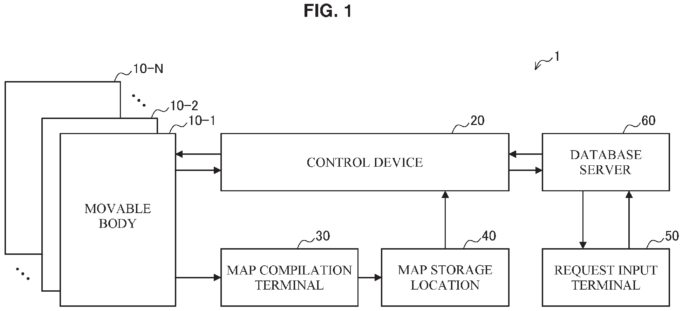

A configuration example of an information processing system according to the embodiment of the present disclosure will be described with reference to FIG. 1. FIG. 1 is a diagram illustrating the configuration example of the information processing system according to the embodiment of the present disclosure. As illustrated in FIG. 1, an information processing system 1 includes movable bodies 10-1 to 10-N (N represents an integer equal to or more than one), a control device 20, a map compilation terminal 30, a map storage location 40, a request input terminal 50, and a database server 60.

Note that each of the movable bodies 10-1 to 10-N may be referred to as a "movable body 10" without being distinguished in particular in the following description.

### (Movable Body 10)

The movable body 10 is implemented with a computer, and autonomously moves. Here, a case is assumed where the movable body 10 includes wheels, and the movable body 10 autonomously runs by rotating the wheels in contact with the ground. However, the movable body 10 may not necessarily include the wheels. For example, the movable body 10 may be an object that runs with an endless track, an object (a so-called drone) that flies using, for example, a propeller, or the like. Alternatively, the movable body 10 may be an object that moves by multipedal walking.

Further, a case where the movable body 10 has a function of executing a desired task will be mainly assumed in the following description. The movable body 10 that executes a task may be also paraphrased as a "robot". A case where a task executed by the movable body 10 is conveyance of luggage will be mainly assumed in the following description. However, types of tasks to be executed by the movable body 10 may not be limited to conveyance of luggage.

Further, a case where an area in which the movable body 10 moves is a factory will be mainly assumed in the following description. However, areas in which the movable body 10 moves may not be limited to the factory.

The movable body 10 can communicate with the control device 20 by wireless communication. Further, the movable body 10 can communicate with the map compilation terminal 30 by wireless communication. A communication scheme used by the movable body 10 may be Wi-Fi (registered trademark) communication, may be 920 MHz multihop wireless communication, or may be other communication schemes.

### (Control Device 20)

The control device 20 is implemented with a computer, and controls the movable bodies 10-1 to 10-N. The control device 20 can communicate with each of the movable bodies 10-1 to 10-N by wireless communication. The control device 20 is connected with each of the map storage location 40 and the database server 60 by wire or wirelessly.

### (Map Compilation Terminal 30)

The map compilation terminal 30 is a terminal that is implemented with a computer, and compiles maps created by the movable bodies 10-1 to 10-N based on an operation of a maintainer. The map compilation terminal 30 can communicate with each of the movable bodies 10-1 to 10-N by wireless communication. The map compilation terminal 30 is connected with the map storage location 40 by wire or wirelessly. Note that the map compilation terminal 30 may correspond to an information processing device.

### (Map Storage Location 40)

The map storage location 40 is implemented with a memory, and stores a compiled map input from the map compilation terminal 30. Further, the map storage location 40 outputs the stored compiled map to the control device 20.

### (Request Input Terminal 50)

The request input terminal 50 is a terminal that is implemented with a computer, and accepts a request related to task execution of the movable body 10 input from a request inputter. Further, the request input terminal 50 is connected with the database server 60 by wire or wirelessly, and transmits an accepted request to the database server 60.

### (Database Server 60)

The database server 60 is implemented with a computer, and stores various databases. More specifically, the database server 60 is connected with the request input terminal 50 by wire or wirelessly, and stores a received request when receiving the request from the request input terminal 50. Further, the database server 60 is connected with the control device 20 by wire or wirelessly, and provides various items of data to the control device 20.

The configuration example of the information processing system 1 according to the embodiment of the present disclosure has been described above.

### (1-2. Configuration of Movable Body 10)

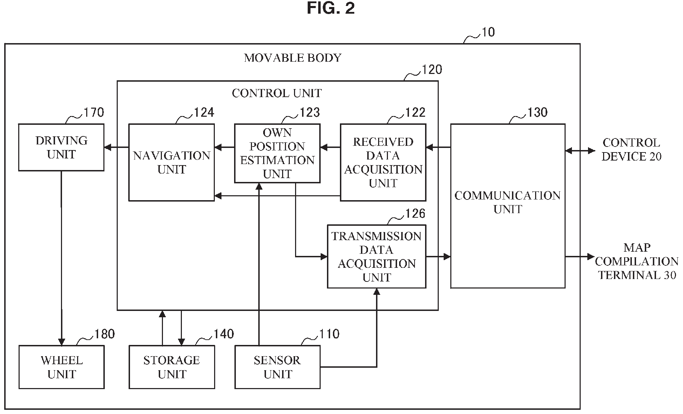

A configuration example of the movable body 10 according to the embodiment of the present disclosure will be described with reference to FIG. 2. FIG. 2 is a diagram illustrating the configuration example of the movable body 10 according to the embodiment of the present disclosure. As illustrated in FIG. 2, the movable body 10 includes a sensor section 110, a control section 120, a communication section 130, a storage section 140, a driving section 170, and a wheel section 180.

### (Sensor Section 110)

The sensor section 110 is implemented with a sensor, and performs sensing on a surrounding environment of the movable body 10 using the sensor and obtains sensor data. Here, a type of the sensor may not be limited. In one example, the sensor may be a depth sensor. Examples of the depth sensor include a Light Detection And Ranging (LiDAR) sensor, a Time of Flight (ToF) sensor, and the like. Alternatively, the sensor may be Red, Green, and Blue cameras.

The sensor data obtained by the sensor section 110 is used by a transmission data acquisition section 126 for map creation. The created map may include positions of obstacles and the like. Further, after the created map is compiled, the sensor data obtained by the sensor section 110 is output to an own position estimation section 123, and is subjected to own position estimation based on the compiled map and the sensor data.

### (Control Section 120)

The control section 120 includes an arithmetic operation device such as a Central Processing Section (CPU), and a function of the control section 120 may be implemented when a program stored in a Read Only Memory (ROM) is expanded in a Random Access Memory (RAM) and is executed by the arithmetic operation device. At this time, a computer-readable recording medium having the program recorded thereon may be also provided. Alternatively, the control section 120 may be configured with dedicated hardware, or may be implemented with a combination of a plurality of hardware.

The control section 120 includes a received data acquisition section 122, the own position estimation section 123, a navigation section 124, and the transmission data acquisition section 126. Details of functions of these components will be described later.

### (Communication Section 130)

The communication section 130 performs wireless communication between the control device 20 and the map compilation terminal 30. More specifically, the communication section 130 receives data from the control device 20 by wireless communication, and outputs the received data to the received data acquisition section 122. Further, the communication section 130 transmits data output from the transmission data acquisition section 126 to the control device 20 or the map compilation terminal 30 by wireless communication.

### (Storage Section 140)

The storage section 140 is a memory that can store programs and data for causing the control section 120 to operate. Further, the storage section 140 can also temporarily store various items of data that are necessary in a process of the operation of the control section 120. For example, a storage device may be a nonvolatile memory.

### (Driving Section 170)

The driving section 170 is implemented with a motor that drives the wheel section 180, and performs rotation start control of the wheel section 180 based on a movement start instruction made by the control section 120 for the movable body 10. Further, the driving section 170 controls a direction of the wheel section 180 based on a direction instruction made by the control section 120 for the movable body 10. Further, the driving section 170 performs control of stopping rotation of the wheel section 180 based on a movement stop instruction made by the control section 120 for the movable body 10.

### (Wheel Section 180)

The wheel section 180 is configured to include the wheels, and starts rotating under rotation start control of the driving section 170. Thus, the movable body 10 starts moving. Further, the wheel section 180 changes the direction under direction control of the driving section 170. Thus, a movement direction of the movable body 10 is changed. Further, the wheel section 180 stops rotating under rotation stop control of the driving section 170. Thus, movement of the movable body is stopped.

The configuration example of the movable body 10 according to the embodiment of the present disclosure has been described above.

### (1-3. Configuration of Control Device 20)

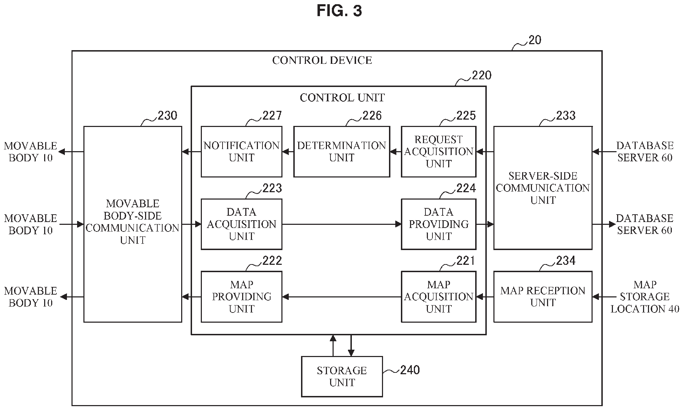

A configuration example of the control device 20 according to the embodiment of the present disclosure will be described with reference to FIG. 3. FIG. 3 is a diagram illustrating the configuration example of the control device 20 according to the embodiment of the present disclosure. As illustrated in FIG. 3, the control device 20 includes a control section 220, a movable body-side communication section 230, a server-side communication section 233, a map reception section 234, and a storage section 240.

### (Control Section 220)

The control section 220 includes an arithmetic operation device such as a Central Processing Section (CPU), and a function of the control section 220 may be implemented when a program stored in a Read Only Memory (ROM) is expanded in a Random Access Memory (RAM) and is executed by the arithmetic operation device. At this time, a computer-readable recording medium having the program recorded thereon may be also provided. Alternatively, the control section 220 may be configured with dedicated hardware, or may be implemented with a combination of a plurality of hardware.

The control section 220 includes a map acquisition section 221, a map providing section 222, a data acquisition section 223, a data providing section 224, a request acquisition section 225, a determination section 226, and a notification section 227. Details of functions of these components will be described later.

### (Movable Body-Side Communication Section 230)

The movable body-side communication section 230 performs wireless communication with the movable body 10. More specifically, the movable body-side communication section 230 receives data from the movable body 10 by wireless communication, and outputs the received data to the data acquisition section 223. Further, the movable body-side communication section 230 transmits data output from the notification section 227 to the movable body 10 by wireless communication. Further, the movable body-side communication section 230 transmits data output from the map providing section 222 to the movable body 10.

### (Server-Side Communication Section 233)

The server-side communication section 233 performs communication with the database server 60. More specifically, the server-side communication section 233 transmits data output from the data providing section 224 to the database server 60. Further, the server-side communication section 233 receives data from the database server 60, and outputs the received data to the request acquisition section 225.

### (Map Reception Section 234)

The map reception section 234 receives the compiled map from the map storage location 40. The map reception section 234 outputs to the map acquisition section 221 the compiled map received from the map storage location 40.

### (Storage Section 240)

The storage section 240 is a memory that can store programs and data for causing the control section 220 to operate. Further, the storage section 240 can also temporarily store various items of data that are necessary in a process of the operation of the control section 220. For example, a storage device may be a nonvolatile memory.

The configuration example of the control device 20 according to the embodiment of the present disclosure has been described above.

### (1-4. Configuration of Map Compilation Terminal 30)

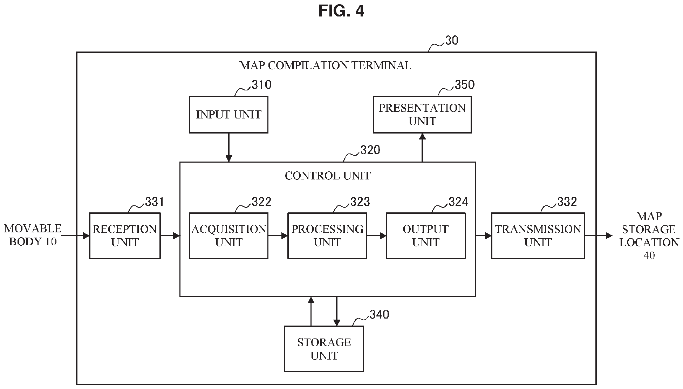

A configuration example of the map compilation terminal 30 according to the embodiment of the present disclosure will be described with reference to FIG. 4. FIG. 4 is a diagram illustrating the configuration example of the map compilation terminal 30 according to the embodiment of the present disclosure. As illustrated in FIG. 4, the map compilation terminal 30 includes an input section 310, a control section 320, a reception section 331, a transmission section 332, a storage section 340, and a presentation section 350.

### (Input Section 310)

The input section 310 accepts an input of an operation of from the maintainer. The embodiment of the present disclosure mainly assumes a case where the input section 310 includes a keyboard and a mouse. However, the input section 310 may include an input device (e.g., a touch panel or the like) other than the keyboard and the mouse.

### (Control Section 320)

The control section 320 includes an arithmetic operation device such as a Central Processing Section (CPU), and a function of the control section 320 may be implemented when a program stored in a Read Only Memory (ROM) is expanded in a Random Access Memory (RAM) and is executed by the arithmetic operation device. At this time, a computer-readable recording medium having the program recorded thereon may be also provided. Alternatively, the control section 320 may be configured with dedicated hardware, or may be implemented with a combination of a plurality of hardware.

The control section 320 includes an acquisition section 322, a processing section 323, and an output section 324. Details of functions of these blocks will be described later.

### (Reception Section 331)

The reception section 331 receives the map transmitted from the movable body 10. The reception section 331 outputs the received map to the control section 320.

### (Transmission Section 332)

The transmission section 332 outputs to the map storage location 40 the compiled map output from the control section 320. The compiled map output to the map storage location 40 is stored in the map storage location 40.

### (Storage Section 340)

The storage section 340 is a memory that can store programs and data for causing the control section 320 to operate. Further, the storage section 340 can also temporarily store various items of data that are necessary in a process of the operation of the control section 320. For example, a storage device may be a nonvolatile memory.

### (Presentation Section 350)

The presentation section 350 has a function of performing presentation under control of the control section 320. Contents presented by the presentation section 350 is visually checked by the maintainer. Here, a mode of the presentation section 350 is not limited in particular. For example, the presentation section 350 may be implemented with a display, and the display may be a Liquid Crystal Display (LCD) device, may be an Organic Light Emitting Diode (OLED) device, or may be a display device such as a lamp.

The configuration example of the map compilation terminal 30 according to the embodiment of the present disclosure has been described above.

### (1-5. Configuration of Request Input Terminal 50)

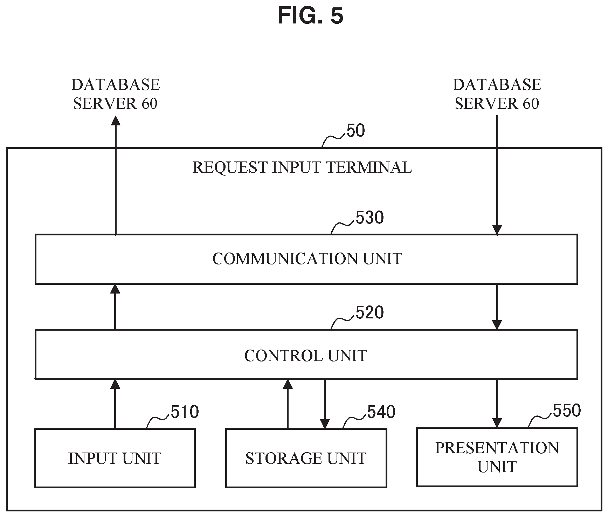

A configuration example of the request input terminal 50 according to the embodiment of the present disclosure will be described with reference to FIG. 5. FIG. 5 is a diagram illustrating the configuration example of the request input terminal 50 according to the embodiment of the present disclosure. As illustrated in FIG. 5, the request input terminal 50 includes an input section 510, a control section 520, a communication section 530, a storage section 540, and a presentation section 550.

### (Input Section 510)

The input section 510 accepts an input of an operation from the request inputter. The embodiment of the present disclosure mainly assumes a case where the input section 510 includes a keyboard and a mouse. However, the input section 510 may include an input device (e.g., a touch panel or the like) other than the keyboard and the mouse.

### (Control Section 520)

The control section 520 includes an arithmetic operation device such as a Central Processing Section (CPU), and a function of the control section 520 may be implemented when a program stored in a Read Only Memory (ROM) is expanded in a Random Access Memory (RAM) and is executed by the arithmetic operation device. At this time, a computer-readable recording medium having the program recorded thereon may be also provided. Alternatively, the control section 520 may be configured with dedicated hardware, or may be implemented with a combination of a plurality of hardware.

### (Communication Section 530)

The communication section 530 performs communication with the database server 60.

### (Storage Section 540)

The storage section 540 is a memory that can store programs and data for causing the control section 520 to operate. Further, the storage section 540 can also temporarily store various items of data that are necessary in a process of the operation of the control section 520. For example, a storage device may be a nonvolatile memory.

### (Presentation Section 550)

The presentation section 550 has a function of performing presentation under control of the control section 520. Contents presented by the presentation section 550 is visually checked by the request inputter. Here, a mode of the presentation section 550 is not limited in particular. For example, the presentation section 550 may be implemented with a display, and the display may be a Liquid Crystal Display (LCD) device, may be an Organic Light Emitting Diode (OLED) device, or may be a display device such as a lamp.

The configuration example of the request input terminal 50 according to the embodiment of the present disclosure has been described above.

### (1-6. Configuration of Database Server 60)

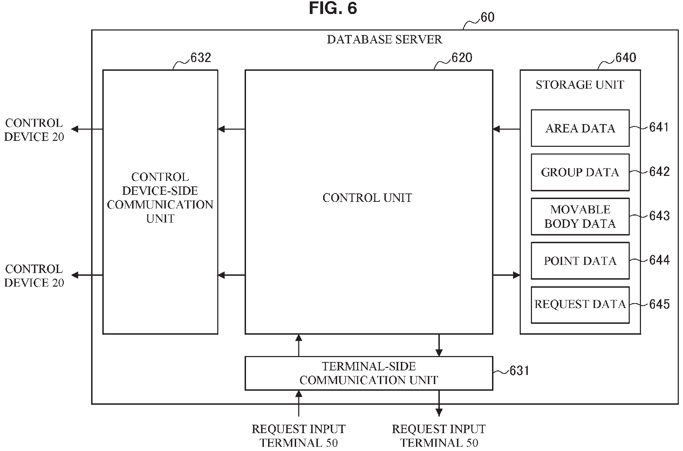

A configuration example of the database server 60 according to the embodiment of the present disclosure will be described with reference to FIG. 6. FIG. 6 is a diagram illustrating the configuration example of the database server 60 according to the embodiment of the present disclosure. As illustrated in FIG. 6, the database server 60 includes a control section 620, a terminal-side communication section 631, a control device-side communication section 632, and a storage section 640.

### (Control Section 620)

The control section 620 includes an arithmetic operation device such as a Central Processing Section (CPU), and a function of the control section 620 may be implemented when a program stored in a Read Only Memory (ROM) is expanded in a Random Access Memory (RAM) and is executed by the arithmetic operation device. At this time, a computer-readable recording medium having the program recorded thereon may be also provided. Alternatively, the control section 620 may be configured with dedicated hardware, or may be implemented with a combination of a plurality of hardware.

### (Terminal-Side Communication Section 631)

The terminal-side communication section 631 performs communication with the request input terminal 50.

### (Control Device-Side Communication Section 632)

The control device-side communication section 632 performs communication with the control device 20.

### (Storage Section 640)

The storage section 640 is a memory that can store programs and data for causing the control section 620 to operate. Further, the storage section 640 can also temporarily store various items of data that are necessary in a process of the operation of the control section 620. For example, a storage device may be a nonvolatile memory.

The configuration example of the database server 60 according to the embodiment of the present disclosure has been described above.

### (2. Details of Function of Information Processing System)

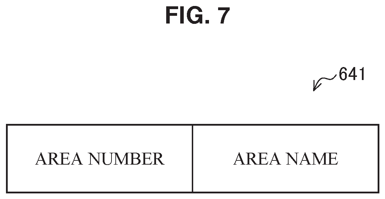

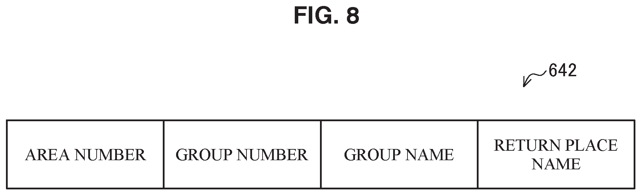

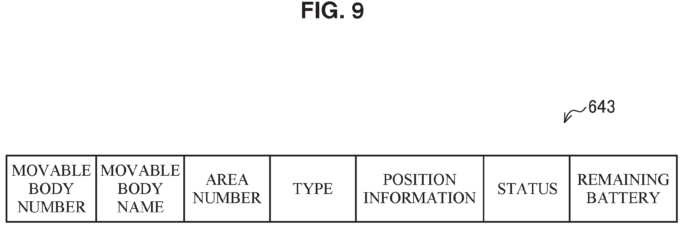

Next, details of a function of the information processing system 1 according to the embodiment of the present disclosure will be described with reference to FIGS. 7 to 9. First, a configuration example of area data 641 stored in the storage section 640 included in the database server 60 will be described with reference to FIG. 7, a configuration example of group data 642 will be described with reference to FIG. 8, and a configuration example of movable body data 643 will be described with reference to FIG. 9. These area data 641, group data 642, and movable body data 643 may be stored in advance by the storage section 640.

### (Area Data 641)

FIG. 7 is a diagram illustrating the configuration example of the area data 641. As illustrated in FIG. 7, the area data 641 is configured by associating an area number and an area name.

The area number is a number for identifying an area in which the movable body 10 moves. Further, the area name is a name of an area in which the movable body 10 moves. In a case where, for example, the area in which the movable body 10 moves is a factory, the area name may be "factory A, building B".

### (Group Data 642)

FIG. 8 is a diagram illustrating the configuration example of the group data 642. As illustrated in FIG. 8, the group data 642 is configured by associating an area number, a group number, a group name, and a return place name.

The area number is a number for identifying an area in which the movable body 10 moves. The group number is a number for identifying a group. The group name is a name of a group. The return place name is a name of a return place of a trolley that can be coupled to the movable body 10. When luggage is loaded on the trolley coupled to the movable body 10 and the movable body 10 moves, the luggage can be conveyed.

### (Movable Body Data 643)

FIG. 9 is a diagram illustrating the configuration example of the movable body data 643. As illustrated in FIG. 9, the movable body data 643 is configured by associating a movable body number, a movable body name, an area number, a type, position information, a status, and battery charge.

The movable body number is a number for identifying the movable body 10. Further, the movable body name is a name of the movable body 10. The area number is a number for identifying an area in which the movable body 10 moves. The type is a type of the movable body 10. For example, a task that the movable body 10 can execute may vary according to the type of the movable body 10.

The position information is information indicating a position of the movable body 10 in a compiled map. The status is a status of the movable body 10. Note that the status of the movable body 10 may include information indicating whether or not an abnormality occurs in the movable body 10, or the like. The battery charge is remaining power of a battery that supplies electrical power to the movable body 10.

### (Map Creation by Movable Body 10)

Before the movable body 10 actually executes a task, the at least one movable body 10 of the movable bodies 10-1 to 10-N creates a map in an area. A technology of simultaneously performing such map creation and own position estimation can be implemented by a Simultaneously Localization and Mapping (SLAM) technology.

The above map is created by the transmission data acquisition section 126. Further, the transmission data acquisition section 126 controls the communication section 130 such that the map is transmitted to the map compilation terminal 30 by wireless communication.

### (Map Compilation by Map Compilation Terminal 30)

In the map compilation terminal 30, the reception section 331 receives a map transmitted from the movable body 10, and the acquisition section 322 acquires the map received by the reception section 331. The processing section 323 controls the presentation section 350 such that the presentation section 350 presents the map to the maintainer. The maintainer inputs to the input section 310 an operation for map compilation while browsing the map. The processing section 323 compiles the map based on the operation input by the maintainer.

For example, the processing section 323 can delete unnecessary drawings on the map based on a deletion operation input by the maintainer. Alternatively, the processing section 323 can adjust an angle of the map based on an angle adjustment operation input by the maintainer. Alternatively, the processing section 323 can trim unnecessary portions of the map based on a trimming operation input by the maintainer.

Further, the processing section 323 can partially replace the map based on a replacement operation input by the maintainer. Alternatively, the processing section 323 can combine the map received by the reception section 331 and a base map based on a combination operation input by the maintainer.

Further, the processing section 323 can assign a plurality of grid lines in a vertical direction and a plurality of grid lines in a horizontal direction to the map transmitted from the movable body 10 based on a grid line assignment operation input by the maintainer. The grid lines are assigned, so that a plurality of rectangular regions partitioned by these grid lines are formed in a lattice pattern. In the following description, each of the plurality of these rectangular regions will be also referred to as a "block".

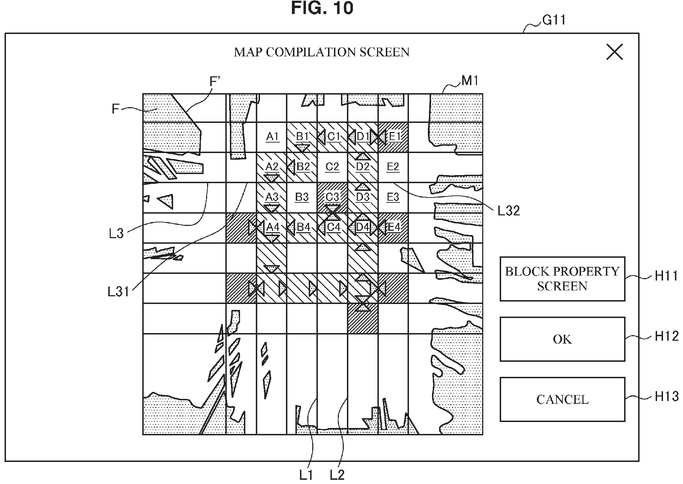

In the embodiment of the present disclosure, the output section 324 controls the presentation section 350 such that a map compilation screen is presented, and the processing section 323 can arbitrarily change a position and a size of each of the plurality of blocks based on an operation input to the input section 310 from the maintainer. A method for arbitrarily changing the position and the size of each of the plurality of blocks will be described with reference to FIGS. 10 to 13.

FIG. 10 is a diagram illustrating a first example of the map compilation screen. In view of FIG. 10, a map compilation screen G11 is displayed. The map compilation screen G11 includes a map M1, a block property screen transition button H11, an OK button H12, and a cancel button H13. The map M1 includes a drawing indicating a position F' of an obstacle detected when the map M1 is created, and a drawing indicating an unknown area F that is not detected due to the presence of the obstacle. The movable body 10 is prohibited from entering the position F' of the obstacle and the unknown area F.

In the example illustrated in FIG. 10, a plurality of grid lines in the vertical direction and a plurality of grid lines in the horizontal direction are assigned to the map M1. The grid lines are assigned in this way to form a plurality of blocks partitioned by these grid lines in a lattice pattern. Note that reference numerals A1 to A4, B1 to B4, C1 to C4, D1 to D4, and E1 to E4 are assigned to part of the plurality of blocks.

Blocks in which triangular arrows are present in the blocks are passage permittable blocks, and directions indicated by the triangular arrows present in the passage permission blocks are movement permittable directions. For example, the block B1 is the passage permittable block, and a downward triangular arrow present in the block B1 indicates that the movable body 10 can move downward (i.e., to the block B2) from the block B1. Light hatchings are applied to the passage permittable blocks.

Further, a block to which the triangular arrow is not directed from any blocks adjacent on upper, lower, left and right sides is an entry prohibited block. Further, since the triangular arrow is not directed to the block C2 from any blocks adjacent on the upper, lower, left and right sides, the block C2 is the entry prohibited block. Hatchings are not applied to the entry prohibited blocks.

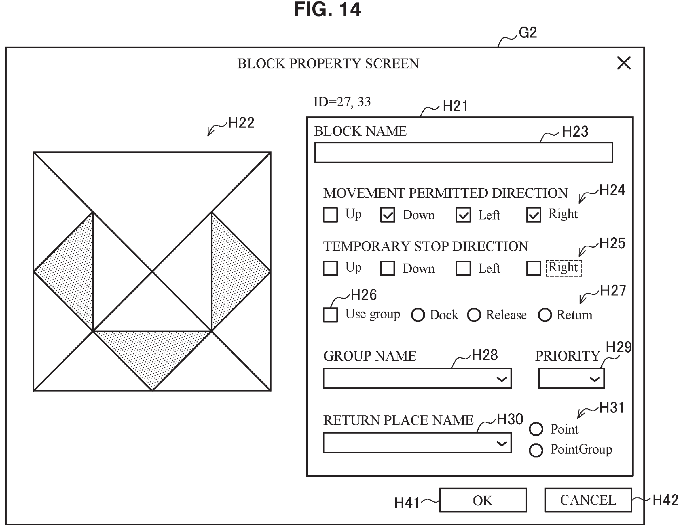

For a block to which a block name has been assigned on a block property screen G2 (FIG. 14), various settings can be made. For example, the block E1 is a block to which a block name has been assigned. Dark hatchings are applied to blocks to which block names have been assigned.

Further, in view of FIG. 10, a boundary L1 is indicated as a straight line located at a boundary between the block B2 (first block) and the block C2 (second block) adjacent to each other. Further, one straight line L3 intersecting the boundary L1 includes the lower side of the block B2 and the lower side of the block C2. Note that the lower side of the block B2 is an example of part (first line) of the outline of the block B2 included in the straight line L3, and the lower side of the block C2 is an example of part (second line) of the outline of the block C2 included in the straight line L3.

For example, the maintainer may think that the maintainer wants to move the straight line L3. In such a case, the maintainer may input a movement operation for the straight line L3 to the input section 310. For example, the movement operation for the straight line L3 may be a drag operation for the straight line L3. The processing section 323 moves the straight line L3 based on a fact that the acquisition section 322 has acquired the movement operation for the straight line L3.

When, for example, the movement operation for the straight line L3 is a movement operation toward a lower direction, the processing section 323 may move the straight line L3 in the lower direction. Alternatively, when the movement operation for the straight line L3 is a movement operation toward an upper direction, the processing section 323 may move the straight line L3 in the upper direction.

Alternatively, the maintainer may think that the maintainer wants to move part of the straight line L3 instead of the entire straight line L3. For example, the maintainer may think that the maintainer wants to move a line L31 (first line) of the straight line L3 on the right side of the boundary L1, yet does not want to move a line L32 (second line) of the straight line L3 on the left side of the boundary L1. In such a case, the maintainer may input a division operation at the boundary L1 to the input section 310.

For example, the division operation at the boundary L1 may be a selection operation for the boundary L1 and a selection operation for division. The selection operation for the boundary L1 may be a click operation or a tap operation for the boundary L1. Further, the selection operation for division may be a click operation or a tap operation for a division selection button displayed in conjunction with the selection operation for the boundary L1.

The processing section 323 divides at the boundary L1 a straight line crossing the boundary L1 based on a fact that the division operation at the boundary L1 has been input to the input section 310 and the acquisition section 322 has acquired the division operation at the boundary L1. In one example, the processing section 323 divides the straight line L3 into the line L31 and the line L32. The processing section 323 moves the line L3 based on a fact that the maintainer has input a movement operation for the line L31 to the input section 310, and the acquisition section 322 has acquired the movement operation for the line L31.

Alternatively, the maintainer may think that the maintainer wants to move the lower side of the block C2 of the straight line L3, yet does not want to move the lower side of each of the blocks A2, B2, D2, and E2 of the straight line L3. In such a case, the maintainer may input to the input section 310 a division operation at a boundary L2 located a boundary between the block C2 and the block D2 in addition to the division operation at the boundary L1.

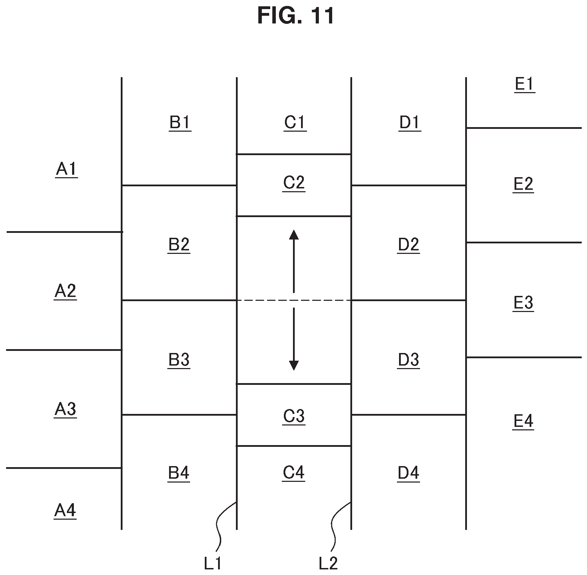

Here, the division operation at the boundary L2 may be the same as the division operation at the boundary L1. The processing section 323 moves the lower side of the block C2 based on a fact that the maintainer has input a movement operation for the lower side of the block C2 to the input section 310, and the acquisition section 322 has acquired the movement operation for the lower side of the block C2. Note that a movement range of the outline of the block is desirably limited. The limitation on the movement range of the outline of the block will be described with reference to FIG. 11.

FIG. 11 is a diagram for describing the limitation on the movement range of the outline of the block. In view of FIG. 11, the lower sides of the respective blocks A1, A2, A3, C1, C3, E1, E2, and E3 have already been moved. Division at the boundary L1 and the boundary L2 has already been performed, and the movement operation for the lower side of the block C2 is about to be performed. At this time, the movement range of the lower side of the block C2 is desirably limited.

When, for example, the movement permitted direction of each of the blocks A2, B2, and C2 is a right direction, the movable body 10 needs to be able to move in order of the blocks A2, B2, C2, and D2.

Hence, if the lower side of the block C2 is located above the upper side of one or both of the block B2 and the block D2 adjacent to the block C2, the movable body 10 cannot move from the block B2 to the block C2 or move from the block C2 to the block D2. Hence, the movement range of the lower side of the block C2 is desirably limited to a lower side of the upper side of each of the block B2 and the block D2 adjacent to the block C2.

Similarly, when the movement permitted direction of each of the blocks A3, B3, and C3 is the right direction, the movable body 10 needs to be able to move in order of the blocks A3 B3, C3, and D3. If the lower side of the block C2 is located below the lower side of one or both of the block B3 adjacent on the lower side of the block B2, and the block D3 adjacent on the lower side of the block D2, the movable body 10 cannot move from the block B3 to the block C3 or move from the block C3 to the block D3. Hence, the movement range of the lower side of the block C2 is desirably limited to an upper side of the lower side of each of the block B3 and the block D3.

Note that, here, the limitation placed on the movement range of the lower side of the block has been described with reference to FIG. 11. However, similar limitation is also desirably placed on a movement range of the left side (or the right side) of the block.

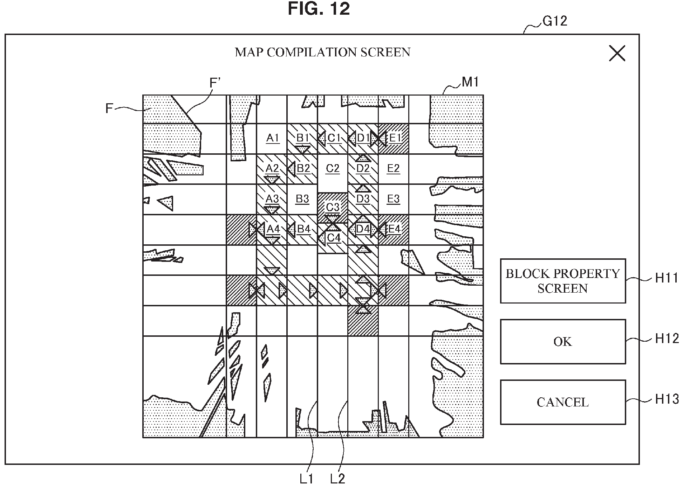

FIG. 12 is a diagram illustrating a second example of the map compilation screen. In view of FIG. 12, a map compilation screen G12 is displayed. The example illustrated in FIG. 12 illustrates that division at the boundary L1 and the boundary L2 has already been performed, and the lower sides of the respective blocks C2, C3, and C4 have already moved in the lower direction.

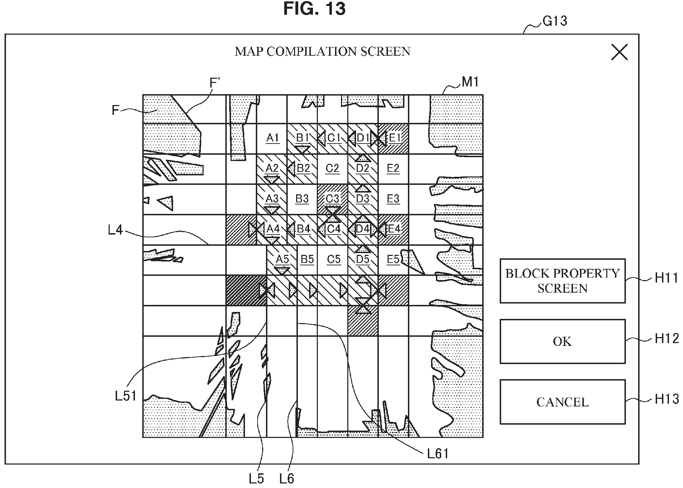

FIG. 13 is a diagram illustrating a third example of the map compilation screen. In view of FIG. 13, a map compilation screen G13 is displayed. The example illustrated in FIG. 13 illustrates that division at a boundary L4 has already been performed, and a line L51 of a straight line L5 on a lower side of the boundary L4 and a line L61 of a straight line L6 on a lower side of the boundary L4 have already been moved in the right direction.

Subsequently, a case will be assumed where the maintainer thinks that the maintainer wants to assign various rules to blocks. In such a case, the maintainer inputs a rule assignment operation to the input section 310, and the acquisition section 322 acquires the rule assignment operation input to the input section 310.

The processing section 323 can assign various rules to blocks based on the rule assignment operation input by the maintainer. Here, examples of rules that can be assigned to blocks include the passage permittable block, the entry prohibited block, the movement permitted direction, a temporary stop direction, and the like. However, the rules that can be assigned to the blocks may not be limited.

More specifically, when there is a block to which a rule needs to be assigned, the maintainer inputs to the input section 310 a selection operation for the block to which the rule needs to be assigned, and inputs to the input section 310 a selection operation for the block property screen transition button H11 on the map compilation screen G13 (FIG. 13). The processing section 323 performs control such that the block property screen associated with the block subjected to the selection operation is presented by the presentation section 350 based on such a selection operation.

FIG. 14 is a diagram illustrating an example of the block property screen. In view of FIG. 14, the block property screen G2 is displayed. The block property screen G2 includes block ID = (27, 33) associated with the block subjected to the selection operation. Further, the block property screen G2 includes a setting window H21, a setting direction image H22, an OK button H41, and a cancel button H42.

The setting window H21 includes a block name input field H23, a movement permitted direction selection field H24, a temporary stop direction selection field H25, a group use selection field H26, a task selection field H27, a group name selection field H28, a priority selection field H29, a return place name selection field H30, and a type selection field H31.

The block name input field H23 is an input field of a block name assigned to a block subjected to the selection operation. For the block to which the block name has been assigned, various settings can be made by selection using H26 to H31.

The movement permitted direction selection field H24 is a selection field of a movement permitted direction toward the block subjected to the selection operation. Here, the upper direction, the lower direction, the left direction, and the right direction can be selected as the movement directions. The movement permitted direction selected in the movement permitted direction selection field H24 may be reflected in the setting direction image H22. In the example illustrated in FIG. 14, since the lower direction, the left direction, and the right direction are selected as the movement permitted directions, triangular arrows indicating these three directions are reflected in the setting direction image H22.

The temporary stop direction selection field H25 is a selection field of the temporary stop direction in the block subjected to the selection operation. Here, the upper direction, the lower direction, the left direction, and the right direction can be selected as the temporary stop directions. The temporary stop directions selected in the temporary stop direction selection field H25 may be reflected in the setting direction image H22.

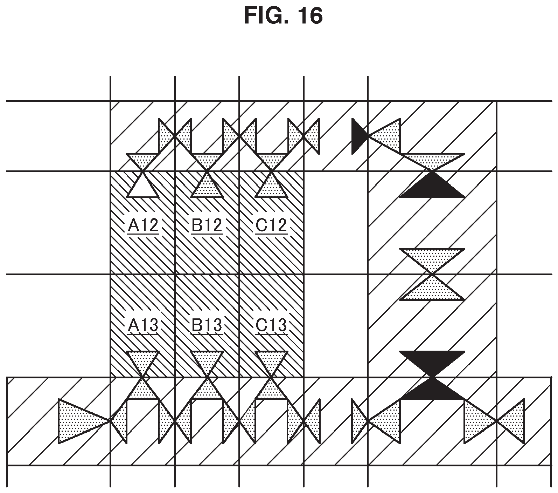

The group use selection field H26 is a selection field used to cause the block subjected to the selection operation to belong to a group. When causing the block to belong to the group is selected, it is possible to select a task in the block using the task selection field H27, and select using the group name selection field H28 a group name to which the group is caused to belong. Note that significance of causing a block to belong to a group will be described later with reference to FIG. 16.

The task selection field H27 is a selection field of a task for the block subjected to the selection operation. Here, "Dock", "Release", and "Return" can be selected as tasks. Note that, when "Return" is selected as the task, whether a return place of a trolley is set as a group or a point (i.e., single block) is selected using the type selection field H31.

Here, "Dock" is to dock (couple) the movable body 10 and the trolley on which luggage is placed. "Release" is to release the trolley docked to the movable body 10. "Return" is to return the trolley (i.e., empty trolley) that is docked to the movable body 10 and on which luggage is not loaded. Note that, when none of "Dock", "Release", and "Return" is selected as the task, the movable body 10 only moves to a task execution place.

The group name selection field H28 is a selection field of a name of a group to which the block subjected to the selection operation is caused to belong. The name of the group can be selected from "group name" of the group data 642. Note that, when a plurality of blocks for which the tasks selected in the task selection field H27 have been selected are present in the group associated with the selected group name, a priority is selected using the priority selection field H29.

The priority selection field H29 is a selection field of a priority when the plurality of blocks for which the same task has been selected are present in the same group. When the group is selected as the task execution place, a task is more readily executed in a block having a higher priority.

The return place name selection field H30 is a field for selecting a block name to which the trolley is returned when a point is selected as the return place of the trolley is selected in the type selection field H31. Note that, when a group is selected as the return place of the trolley in the type selection field H31, a return place name associated with the group name in the group data 642 is displayed in the return place name selection field H30.

The type selection field H31 is a selection field for selecting whether to set the return place of the trolley as a group or a block. When the point is selected as the return place of the trolley in the type selection field H31, it is possible to select the return place name using the return place name selection field H30.

When the maintainer inputs the selection operation for H23 to H31, and inputs a selection operation for the OK button H41, the acquisition section 322 acquires the selection operation. Further, the processing section 323 assigns the movement permitted direction selected in the movement permitted direction selection field H24 and the temporary stop direction selected in the temporary stop direction selection field H25 as rules to the block subjected to the selection operation.

Further, the output section 324 controls the transmission section 332 such that the block name input to the block name input field H23, the block ID = (27, 33), a number for identifying an area to which the block subjected to the selection operation belongs, a group number associated with a group name selected in the group name selection field H28, an ID assigned to a task selected in the task selection field H27, a priority selected in the priority selection field H29, and a return place name selected in the return place name selection field H30 are transmitted as the block data 644 to the database server 60 via the control device 20.

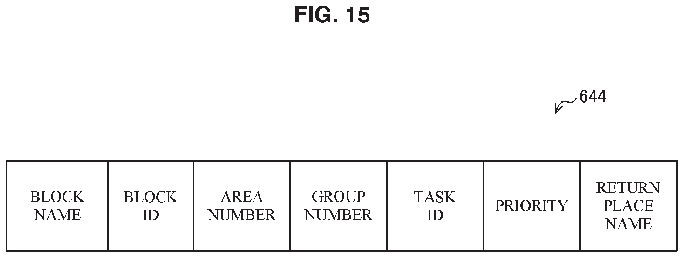

FIG. 15 is a diagram illustrating a configuration example of the block data 644. As illustrated in FIG. 15, the block data 644 is configured by associating a block name, a block ID, an area number, a group number, a task ID, a priority, and a return place name. In the database server 60, when receiving the block data 644 from the map compilation terminal 30 via the control device 20, the control device-side communication section 632 causes the storage section 640 to store the received block data 644.

On the other hand, when the maintainer inputs a selection operation for the cancel button H42, a screen presented by the presentation section 350 transitions to the map compilation screen G13 (FIG. 13). Here, significance of causing a block to belong to a group will be described with reference to FIG. 16.

FIG. 16 is a diagram for describing the significance of causing a block to belong to a group. In an example illustrated in FIG. 16, light triangular arrows indicate the movement permitted directions, and dark triangular arrows indicate the temporary stop directions. Here, a case is assumed where blocks A12, B12, C12, A13, B13, and C13 belong to the same group. Such a group is prepared, so that, when a request is input, a group can be selected as the task execution place.

For example, a case is assumed where a task ID associated with the task "Release" is associated with a group number associated with a group in the block data 644, and, when a request is input, the group is selected as the task execution place. In such a case, the control device 20 specifies blocks in which a trolley is not put from the blocks A12, B12, C12, A13, B13, and C13 belonging to the group based on data obtained by a sensor that senses whether or not there is an object in each block. Further, the control device 20 can control the movable body 10 to release the trolley to these blocks. In one example, the sensor that senses whether or not there is an object may be an optical sensor or the like.

Alternatively, a case is assumed where a task ID associated with the task "Dock" is associated with a group number associated with a group in the block data 644, and, when a request is input, the group is selected as the task execution place. In such a case, the control device 20 specifies a block in which the trolley is put from the blocks A12, B12, C12, A13, B13, and C13 belonging to the group based on data obtained by the sensor that senses whether or not there is the trolley in each block. Further, the control device 20 can control the movable body 10 to dock the trolley put in this block, and the movable body 10.

Note that a case is also assumed where there are blocks that do not belong to groups. Further, a case may be also assumed where, when a request is input, a block that does not belong to a group is selected as the task execution place. In such a case, the request inputter only needs to select a task that the movable body 10 is caused to execute in a block that does not belong to the group when inputting a request.

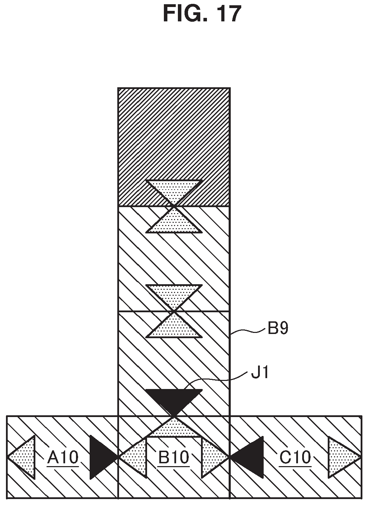

The case where the temporary stop directions are assigned to blocks by the selection operation of the maintainer has been described above. The temporary stop directions may be automatically assigned to the blocks by the processing section 323. Note that, when there are a plurality of movable body numbers associated with a target area in view of the movable body data 643 (FIG. 9), the processing section 323 may automatically assign the temporary stop directions to the blocks assuming that there is a probability that a plurality of movable bodies collide against each other. Automatic assignment of the temporary stop direction to a block will be described with reference to FIG. 17.

FIG. 17 is a diagram for describing automatic assignment of a temporary stop direction to a block. In view of FIG. 17, blocks A10, B10, and C10 are illustrated. Thin triangular arrows indicate movement permitted directions. Further, a block B9 adjacent to the block B10 is illustrated.

In an example illustrated in FIG. 17, the processing section 323 performs a process of determining a stop block (first stop block) at which the movable body 10 is caused to at least temporarily stop, based on the movement permitted directions in the respective blocks A10, B9, B10, and C10.

More specifically, the processing section 323 determines whether or not there is a collision block that is a block to which the movable body 10 can move from a plurality of directions, based on the movement permitted directions in the respective blocks A10, B9, B10, and C10. In the example illustrated in FIG. 17, since the movable body 10 can move to the block B10 from any of the block A10, the block B9, and the block C10, the block B10 is the collision block. When determining that there is the collision block, the processing section 323 determines a stop block based on the collision block.

When, for example, determining that there is a collision area including one collision block, the processing section 323 determines as the stop block a block that is adjacent to the collision area and to which the movement permitted direction for the collision area has been set. In the example illustrated in FIG. 17, since the block B10 is the one collision block, the block B10 can be determined as the collision area. The processing section 323 can determine as stop blocks the respective blocks A10, B9, and C10 adjacent to the block B10 that is the collision area.

Further, the processing section 323 automatically determine movement directions toward the block B10 that is a collision block as the temporary stop directions in the blocks A10, B9, and C10 determined as the stop blocks. In the example illustrated in FIG. 17, the lower direction that is the movement direction toward the block B10 that is the collision block is determined as a temporary stop direction J1 in the block B9. Note that a combination of a position of a block and a temporary stop direction in this block may correspond to information indicating the stop block.

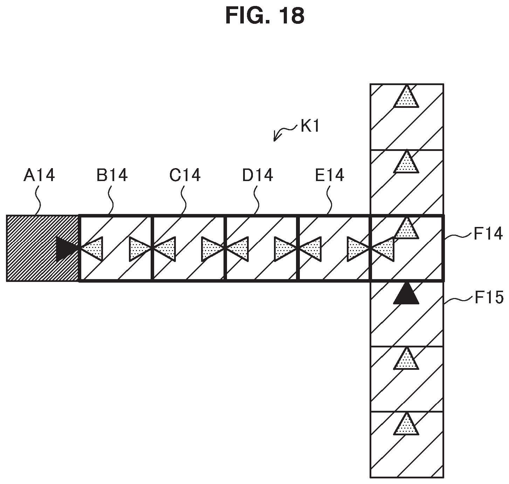

FIG. 18 is another diagram for describing automatic assignment of the temporary stop direction to a block. In view of FIG. 18, blocks A14, B14, C14, D14, E14, and F14 are illustrated. Thin triangular arrows indicate movement permitted directions. Further, a block F15 adjacent to the block F14 is illustrated.

In the example illustrated in FIG. 18, when determining that there is a collision area including a plurality of continuous collision blocks, the processing section 323 determines as the stop block a block that is adjacent to the collision area and to which the movement permitted direction for the collision area has been set. In the example illustrated in FIG. 18, since the blocks B14, C14, D14, E14, and F14 are a plurality of continuous collision blocks, the blocks B14, C14, D14, E14, and F14 can be determined as a collision area K1.

The processing section 323 can determine as the stop block the block A14 that is adjacent to the block B14 included in the collision area K1 and to which the movement permitted direction toward the block B14 included in the collision area has been set. Further, the processing section 323 can determine as the stop block the block F15 that is adjacent to the block F14 included in the collision area K1 and to which the movement permitted direction toward the block F14 included in the collision area K1 has been set.

The output section 324 outputs the map compiled by the processing section 323 to the transmission section 332. The compiled map can include a position of an obstacle, a position of a block (e.g., a gravity position of the block), a rule assigned to the block, and the like. Further, the transmission section 332 transmits the compiled map to the map storage location 40. The map storage location 40 stores the compiled map transmitted from the transmission section 332. When the control device 20 is activated by the map compilation terminal 30, the map acquisition section 221 in the control device 20 acquires the compiled map stored by the map storage location 40 via the map reception section 234.

The map providing section 222 controls the movable body-side communication section 230 such that the compiled map is transmitted to each of the movable bodies 10-1 to 10-N by wireless communication.

In each of the movable bodies 10-1 to 10-N, the communication section 130 receives the compiled map from the control device 20 by wireless communication, and outputs the received compiled map to the received data acquisition section 122. The received data acquisition section 122 outputs the compiled map to each of the own position estimation section 123 and the navigation section 124.

### (Navigation)

The own position estimation section 123 performs own position estimation based on sensor data obtained by the sensor section 110 while referring to the compiled map. The own position estimation section 123 outputs an own position estimation result to the navigation section 124. The navigation section 124 performs navigation based on the compiled map and the own position estimation result. The navigation is implemented by outputting various instructions (such as the movement start instruction, the direction instruction, and the movement stop instruction) to the driving section 170.

The own position estimation result obtained by the own position estimation section 123 is acquired as the position information of the movable body 10 by the transmission data acquisition section 126. Further, the status and the battery charge of the movable body 10 are acquired by the transmission data acquisition section 126. The transmission data acquisition section 126 controls the communication section 130 such that the movable body number, the position information, the status, and the battery charge of the movable body 10 are transmitted to the control device 20.

In the control device 20, the movable body-side communication section 230 receives the movable body number, the position information, the status, and the battery charge of the movable body 10. The data acquisition section 223 acquires the movable body number, the position information, the status, and the battery charge of the movable body 10. The data providing section 224 outputs the movable body number, the position information, the status, and the battery charge of the movable body 10 to the server-side communication section 233, and the server-side communication section 233 outputs the movable body number, the position information, the status, and the battery charge of the movable body 10 to the database server 60.

In the database server 60, the control device-side communication section 632 receives the movable body number, the position information, the status, and the battery charge of the movable body 10, and the control section 620 updates the position information, the status, and the battery charge of the movable body 10 associated with the movable body number received by the control device-side communication section 632 with the position information, the status, and the battery charge of the movable body 10 received by the control device-side communication section 632.

In the database server 60, the terminal-side communication section 631 transmits the movable body data 643 to the request input terminal 50.

### (Request Input to Request Input Terminal 50)

In the request input terminal 50, the communication section 530 receives the movable body data 643, and the control section 520 controls the presentation section 550 such that the presentation section 550 presents the movable body data 643 to the request inputter. The request inputter inputs a request to the input section 510 while browsing the movable body data 643. For example, the request includes a task, a task execution place, and a movable body number for executing the task.

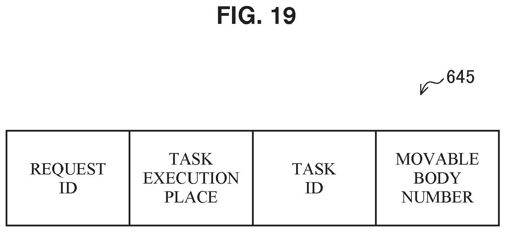

The control section 520 generates request data 645 (FIG. 6) based on the request input by the request inputter, and controls the communication section 530 such that the generated request data 645 is transmitted to the database server 60. In the database server 60, the terminal-side communication section 631 receives the request data 645, and the control section 620 causes the storage section 640 to store the request data 645. A configuration example of the request data 645 will be described with reference to FIG. 19.

FIG. 19 is a diagram illustrating a configuration example of the request data 645. As illustrated in FIG. 19, the request data 645 is configured by associating a request ID, a task execution place, a task ID, and a movable body number. The request ID is an ID that is assigned to a request. The task execution place is a block in which a task is executed, and is associated with a block ID. The task ID is an ID for identifying the task. The movable body number is a number for identifying a movable body that is caused to execute the task.

In the database server 60, the control device-side communication section 632 transmits the request data 645 to the control device 20. In the control device 20, the server-side communication section 233 receives the request data 645, and outputs the request data 645 to the request acquisition section 225. The request acquisition section 225 acquires the request data 645 to output to the determination section 226.

### (Scenario Distribution to Movable Body 10)

The determination section 226 calculates a movement route of the movable body 10 based on a rule assigned to a block, position information of the movable body 10 identified based on the movable body number included in the request data 645, and a task execution place included in the request data 645. For example, the movement route of the movable body 10 may be information indicating a shortest route that is from the position of the movable body 10 to the task execution place and for which the rule assigned to the block has been considered.

Further, a scenario including route information and the task ID is acquired by the notification section 227. The notification section 227 transmits the scenario to the movable body 10 via the movable body-side communication section 230. Note that, in a case where the movable body 10 includes an indicator light, the server-side acquisition section 221 may include in the scenario a timing at which the movable body 10 turns on the indicator light. The timing at which the movable body 10 turns on the indicator light may be determined as an arbitrary timing. The scenario may include information indicating the stop block. Thus, the movable body 10 can grasp whether or not the movable body 10 has reached the stop block, based on the information indicating the stop block and the position information of the movable body 10.

In the movable body 10, the communication section 130 receives the scenario from the control device 20 by wireless communication, and outputs the received scenario to the navigation section 124. The navigation section 124 performs navigation based on the scenario.

### (Transmission of Emergency Control Signal)

When, for example, the control device 20 detects that an emergency situation has occurred in the movable body 10 during movement of the movable body 10, the control device 20 may transmit control data (hereinafter, also referred to as an "emergency control signal") to the movable body 10. For example, the emergency control signal may include the movement stop instruction, the movement start instruction, or the like of the movable body 10. Note that the movement stop instruction may be transmitted when there is a risk that the plurality of movable bodies 10 collide against each other, and the movement start instruction may be transmitted when there is no such a risk.

In the example illustrated in FIG. 17, based on a fact that the movable body 10 has provided to the control device 20 a notification indicating that the movable body 10 has reached the block B9 that is the stop block, stopped in the block B9, and transitioned to a standby state, the determination section 226 determines whether or not there is an object in the block B10 that is the collision area. For example, the determination section 226 may determine whether or not there is an object in the block B10 based on whether or not positions of other movable bodies managed by the control device 20 and the position of the block B10 that is the collision area match. Alternatively, the determination section 226 may determine whether or not there is an object in the block B10 based on data obtained by the sensor that senses whether or not there is an object in the block B10. Note that, based on a fact that the movable body 10 has provided to the control device 20 a notification indicating that the movable body 10 has reached the block B9 that is the stop block, the notification section 227 may notify the movable body 10 of the movement stop instruction in the block B9. Further, the movable body 10 may stop in the block B9 based on the movement stop instruction and transition to the standby state, and the movable body 10 may provide to the control device 20 a notification indicating that the movable body 10 has transitioned to the standby state.

When there is no object in the block B10 that is the collision area, the notification section 227 may notify the movable body 10 of the movement start instruction to the block B10. Thus, it is possible to reduce a probability that the movable body 10 and the other movable bodies collide.

The example illustrated in FIG. 18 assumes that the movable body 10 has provided to the control device 20 a notification indicating that the movable body 10 has reached the block F15 that is the stop block, stopped in the block F15, and transitioned to a standby state. Further, a case is assumed where the block A14 that is the stop block (second stop block) different from the block F15 is present at a movement destination of the movable body 10, and this block A14 is adjacent to the collision area K1. In such a case, the determination section 226 not only determines whether or not there is an object in the collision area K1, but also determines whether or not there is an object in the block A14. For example, the determination section 226 may determine whether or not there is an object in the block A14 based on whether or not positions of other movable bodies managed by the control device 20 and the position of the block A14 match. Alternatively, the determination section 226 may determine whether or not there is an object in the block A14 based on data obtained by the sensor that senses whether or not there is the object in the block A14. Note that, based on a fact that the movable body 10 has provided to the control device 20 a notification indicating that the movable body 10 has reached the block F15 that is the stop block, the notification section 227 may notify the movable body 10 of the movement stop instruction at the block F15. Further, the movable body 10 may stop in the block F15 based on the movement stop instruction and transition to the standby state, and the movable body 10 may provide to the control device 20 a notification indicating that the movable body 10 has transitioned to the standby state.

When there is no object in the collision area K1, and when there is no object in the block A14, the notification section 227 may notify the movable body 10 of the movement start instruction to the collision area K1. Thus, it is possible to reduce a probability that the movable body 10 and the other movable bodies collide.

In the movable body 10, the communication section 130 receives the emergency control signal, and outputs the received emergency control signal to the navigation section 124. When the emergency control signal is the movement start instruction, the navigation section 124 outputs an instruction for performing rotation start control of the wheel section 180 to the driving section 170. On the other hand, when the emergency control signal is the movement stop instruction, the navigation section 124 outputs an instruction for performing rotation stop control of the wheel section 180 to the driving section 170.

The details of the function of the information processing system 1 according to the embodiment of the present disclosure have been described above.

### (3. Operation Example of Information Processing System)

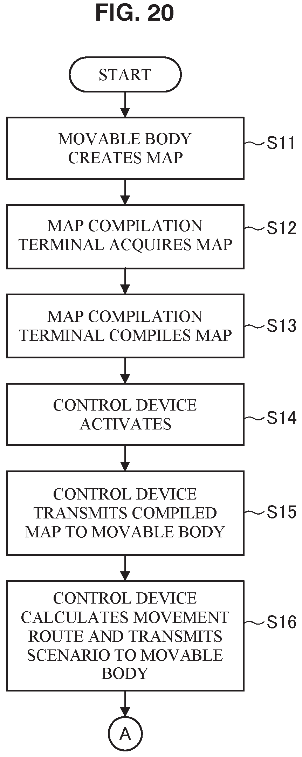

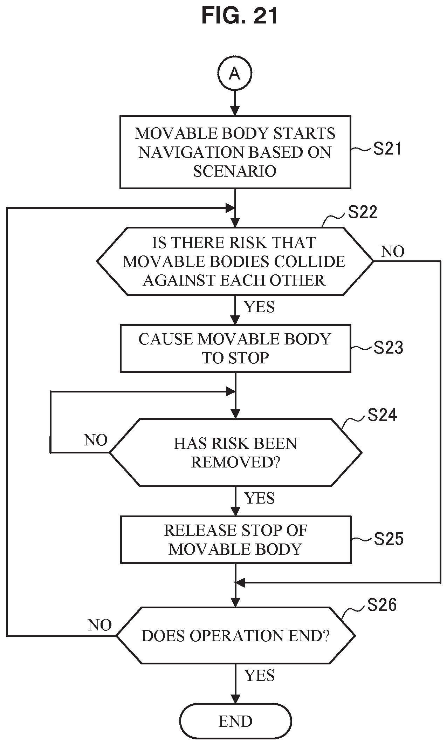

Next, the operation example of the information processing system 1 according to the embodiment of the present disclosure will be described with reference to FIGS. 20 and 21 (also with reference to FIGS. 1 to 19 as appropriate). FIG. 20 illustrates a first half of a flowchart illustrating the operation example of the information processing system 1 according to the embodiment of the present disclosure. FIG. 21 illustrates a second half of the flowchart illustrating the operation example of the information processing system 1 according to the embodiment of the present disclosure.

As illustrated in FIG. 20, in the at least one movable body 10 of the movable bodies 10-1 to 10-N, the transmission data acquisition section 126 creates a map in an area (S11). The transmission data acquisition section 126 controls the communication section 130 such that the map is transmitted to the map compilation terminal 30 by wireless communication.

In the map compilation terminal 30, the reception section 331 receives a map transmitted from the movable body 10, and the acquisition section 322 acquires the map received by the reception section 331 (S12). The processing section 323 controls the presentation section 350 such that the presentation section 350 presents the map to the maintainer. The maintainer inputs to the input section 310 an operation for map compilation while browsing the map. The processing section 323 compiles the map based on the operation input by the maintainer (S13). At this time, the processing section 323 may assign the temporary stop direction to the block.

The output section 324 outputs the map compiled by the processing section 323 to the transmission section 332. Further, the transmission section 332 transmits the compiled map to the map storage location 40. The map storage location 40 stores the compiled map transmitted from the transmission section 332. When the control device 20 is activated by the map compilation terminal 30 (S14), the server-side acquisition section 221 in the control device 20 acquires the compiled map stored by the map storage location 40 via the map reception section 234.

The map providing section 222 controls the movable body-side communication section 230 such that the compiled map is transmitted to each of the movable bodies 10-1 to 10-N by wireless communication (S15).

In each of the movable bodies 10-1 to 10-N, the communication section 130 receives the compiled map from the control device 20 by wireless communication, and outputs the received compiled map to the received data acquisition section 122. The received data acquisition section 122 outputs the compiled map to each of the own position estimation section 123 and the navigation section 124.

The own position estimation section 123 performs own position estimation based on the sensor data obtained by the sensor section 110 while referring to the compiled map. The own position estimation section 123 outputs an own position estimation result to the navigation section 124. The navigation section 124 performs navigation based on the compiled map and the own position estimation result.

The own position estimation result obtained by the own position estimation section 123 is acquired as the position information of the movable body 10 by the transmission data acquisition section 126. The status and the battery charge of the movable body 10 are acquired by the transmission data acquisition section 126. The position information, the status, and the battery charge of the movable body 10 are transmitted from the movable body 10 to the control device 20 by wireless communication, and are transmitted from the control device 20 to the database server 60, and the database server 60 stores the position information, the status, and the battery charge of the movable body 10.

In the database server 60, the terminal-side communication section 631 transmits movable body data including the position information and the status of the movable body 10 to the request input terminal 50. In the request input terminal 50, the communication section 530 receives the movable body data 643, and the control section 520 controls the presentation section 550 such that the presentation section 550 presents the movable body data to the request inputter. The request inputter inputs a request to the input section 510 while browsing the movable body data.

The control section 520 generates request data based on the request input by the request inputter, and controls the communication section 530 such that the generated request data is transmitted to the database server 60. In the database server 60, the terminal-side communication section 631 receives the request data, and the control section 620 causes the storage section 640 to store the request data.

In the database server 60, the control device-side communication section 632 transmits the request data 645 to the control device 20. In the control device 20, the server-side communication section 233 receives the request data 645, and outputs the request data 645 to the request acquisition section 225. The request acquisition section 225 acquires the request data 645 to output to the determination section 226.

The determination section 226 calculates the movement route of the movable body 10 based on a rule assigned to a block during map compilation, the position information of the movable body 10, and the task execution place, the notification section 227 acquires a scenario including route information and a task ID, and the scenario acquired by the notification section 227 is transmitted to the movable body 10 by wireless communication (S16). In the movable body 10, the communication section 130 receives the scenario from the control device 20 by wireless communication, and outputs the received scenario to the navigation section 124.

As illustrated in FIG. 21, the navigation section 124 starts navigation based on the scenario (S21). In the control device 20, the determination section 226 determines whether or not there is a risk that movable bodies collide against each other (S22). In a case where it is determined that there is a risk that the movable bodies collide against each other ("YES" in S22), the notification section 227 stops the movable body 10 (S23). On the other hand, in a case where it is determined that there is no risk that the movable bodies collide against each other ("NO" in S22), the operation proceeds to S26.

In the control device 20, the determination section 226 determines whether or not the risk that movable bodies collide against each other has been removed (S24). In a case where it is determined that the risk that the movable bodies collide against each other has been removed ("YES" in S24), the notification section 227 releases stop of the movable body 10 (S25). On the other hand, in a case where it is determined that the risk that the movable bodies collide against each other is not removed ("NO" in S24), the operation proceeds to S24.

In a case where the operation continues in the movable body 10 ("NO" in S26), the operation proceeds to S22. On the other hand, in a case where the operation ends in the movable body 10 ("YES" in S26), the operation of the movable body 10 ends.

### (4. Effect)

As described above, according to the embodiment of the present disclosure, there is provided the information processing system that includes: a processing section that performs a process of determining a first stop block at which a movable body is at least temporarily stopped, based on a movement permitted direction of the movable body in a plurality of blocks in which the movable body can pass; and an output section that outputs information indicating the first stop block. Thus, it is possible to enjoy the effect that it is possible to further reduce a probability that a plurality of movable bodies collide against each other.

### (5. Supplementary Explanation)

Although the suitable embodiment of the present disclosure has been described in detail above with reference to the accompanying drawings, the present disclosure is not limited to such an example. It is obvious that one having ordinary knowledge in a technical field to which the present disclosure belongs can arrive at various change examples or alteration examples within the scope of the technical idea recited in the claims, and it is naturally understood that the various change examples or alteration examples belong to the technical scope of the present disclosure.

## Claims

1. An information processing system comprising:
a processing section configured to perform a process of determining a first stop block at which a movable body is at least temporarily stopped, based on a movement permitted direction of the movable body in a plurality of blocks in which the movable body can pass; and
an output section configured to output information indicating the first stop block.

2. The information processing system according to claim 1, wherein the processing section determines based on the movement permitted direction whether or not there is a collision block that is a block to which the movable body from a plurality of directions can move, and determines the first stop block based on the collision block when determining that there is the collision block.

3. The information processing system according to claim 2, wherein, when determining that there is a collision area including the one collision block or a plurality of the collision blocks that are continuous, the processing section determines as the first stop block a block that is adjacent to the collision area and to which the movement permitted direction for the collision area has been set.

4. The information processing system according to claim 3, further comprising:
a determination section configured to determine whether or not there is an object in the collision area, based on a notification of the movable body indicating that the movable body has arrived at the first stop block; and
a notification section configured to notify the movable body of a movement start instruction to the collision area when there is not the object in the collision area.

5. The information processing system according to claim 4, wherein
when there is a second stop block different from the first stop block at a movement destination of the movable body, and when the second stop block is adjacent to the collision area, the determination section determines whether or not there is an object in the second stop block, and
when there is not the object in the second stop block, the notification section notifies the movable body of a movement start instruction to the first stop block.

6. The information processing system according to claim 1, wherein
the output section controls display of the plurality of blocks, and
the information processing system further comprises an acquisition section configured to acquire a selection operation of selecting the movement permitted direction.

7. An information processing method performed by a computer includes:
performing a process of determining a first stop block at which a movable body is at least temporarily stopped, based on a movement permitted direction of the movable body in a plurality of blocks in which the movable body can pass; and
outputting information indicating the first stop block.

8. A program causing a computer to function as:
a processing section configured to perform a process of determining a first stop block at which a movable body is at least temporarily stopped, based on a movement permitted direction of the movable body in a plurality of blocks in which the movable body can pass; and
an output section configured to output information indicating the first stop block.

9. An information processing device comprising:
an output section configured to control display of a plurality of blocks in which a movable body can pass; and
an acquisition section configured to acquire a selection operation of selecting a movement permitted direction of the movable body in each of the plurality of blocks.

10. The information processing device according to claim 9, wherein
one straight line intersecting a boundary between a first block and a second block adjacent to each other among the plurality of blocks includes a first line that is part of an outline of the first block and a second line that is part of an outline of the second block,
the acquisition section acquires a movement operation for the straight line, and
the information processing device comprises a processing section configured to move the straight line based on the acquisition of the movement operation.

11. The information processing device according to claim 10, wherein
the acquisition section acquires a division operation at the boundary, and a first movement operation for the first line, and
the processing section divides the first line and the second line and moves the first line based on the acquisition of the first movement operation after the division operation is acquired.

12. An information processing method executed by a computer, the information processing method comprising:
controlling display of a plurality of blocks in which a movable body can pass; and
acquiring a selection operation of selecting a movement permitted direction of the movable body in each of the plurality of blocks.

13. A program causing a computer to function as:
an output section configured to control display of a plurality of blocks in which a movable body can pass; and
an acquisition section configured to acquire a selection operation of selecting a movement permitted direction of the movable body in each of the plurality of blocks.
